# EUROPEAN PATENT APPLICATION

(11) **EP 4 686 741 A1**
(43) Date of publication of application: **04.02.2026**
(21) Application number: 25189283.2
(22) Date of filing: 14.07.2025
(51) Int. Cl.: C08L 77/06, C08K 7/06, C08K 7/14, C08L 79/02, C08G 69/26

(54) **RESIN COMPOSITION AND MOLDED BODY**

(30) Priority: 29.07.2024 JP 2024122608
(71) Applicant: Sumitomo Chemical Company, Limited, Tokyo 103-6020 (JP)
(72) Inventor: NOJIMA, Shiki, Chiba, 299-0195 (JP)
(74) Representative: Vossius & Partner Patentanwälte Rechtsanwälte mbB

(57) **Abstract**

There are provided a resin composition that makes it possible to produce a molded body having enhanced durability and a molded body containing this resin composition. A resin composition containing a semi-aromatic polyamide having a structural unit represented by formula (1), a glass fiber whose cross-sectional shape is flat, and a carbodiimide. In formula (1), Ar¹ represents a phenylene group or a naphthylene group, and a plurality of Ar¹s of the semi-aromatic polyamide may be the same as or different from one another. p is an integer of 4 to 12.

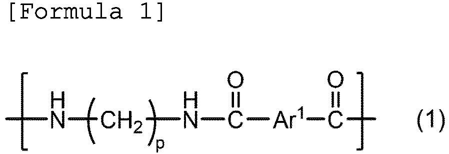

## Description

### Technical Field

The present disclosure relates to a resin composition and a molded body.

### Background Art

Polyamide has excellent wear resistance and strength and is widely used as a molding material for various members such as mechanical components.

Patent Literature 1 discloses a resin composition for an engine support member, the resin composition containing two types of polyamide resins each having different crystallinity, a fibrous filler, and a heatresistant stabilizer.

### Citation List

### Patent Literature

Patent Literature 1: Japanese Patent Laid-Open No. 2017-2205

### Summary of Invention

### Problems to be Solved by Invention

However, there is a need for further improvements in the durability of a molded body containing a conventional resin composition containing a polyamide resin and a glass fiber.

The present disclosure has been made in view of the above circumstances, and an object of the present disclosure is to provide a resin composition capable of producing a molded body having enhanced durability and a molded body containing this resin composition.

### Means to Solve the Problems

The present disclosure includes the following modes in order to solve the above problem.
[1] A resin composition comprising a semi-aromatic polyamide having a structural unit represented by the following formula (1); a glass fiber whose cross-sectional shape is flat; and a carbodiimide. 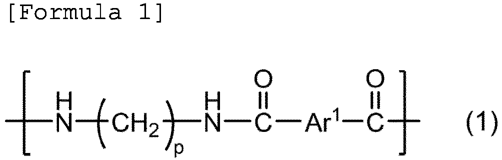 wherein Ar¹ represents a phenylene group or a naphthylene group, and a plurality of Ar¹s of the semi-aromatic polyamide are the same as or different from one another; and p is an integer of 4 to 12.
[2] The resin composition according to [1], wherein an aspect ratio of a cross section perpendicular to a length direction in the flat glass fiber is 1.3/1 or more and 20/1 or less.
[3] The resin composition according to [1] or [2], wherein the carbodiimide is a water-soluble carbodiimide.
[4] The resin composition according to any one of [1] to [3], wherein the semi-aromatic polyamide is a semi-aromatic polyamide having a structural unit represented by formula (1) wherein Ar¹ represents a 1,4-phenylene group and p is 9 or 10.
[5] The resin composition according to any one of [1] to [4], wherein a content of the carbodiimide is 0.03% by mass or more and 20% by mass or less, 0.03% by mass or more and 2% by mass or less, preferably 0.05% by mass or more and 1.8% by mass or less, and more preferably 0.05% by mass or more and 1% by mass or less, based on a total mass of the resin composition.
[6] The resin composition according to any one of [1] to [5], wherein a content of the glass fiber whose cross-sectional shape is flat is 5% by mass or more and 60% by mass or less, preferably 10% by mass or more and 50% by mass or less, and more preferably 15% by mass or more and 40% by mass or less, based on a total mass of the resin composition.
[7] The resin composition according to any one of [1] to [6], wherein a content of the semi-aromatic polyamide is 40% by mass or more and 95% by mass or less, preferably 50% by mass or more and 90% by mass or less, and more preferably 60% by mass or more and 85% by mass or less, based on a total mass of the resin composition.
[8] The resin composition according to any one of [1] to [7], wherein a content of the glass fiber whose cross section is flat is 5 parts by mass or more and 160 parts by mass or less, preferably 25 parts by mass or more and 75 parts by mass or less, and more preferably 35 parts by mass or more and 50 parts by mass or less; and a content of the carbodiimide is 0.03 parts by mass or more and 5 parts by mass or less, preferably 0.05 parts by mass or more and 3.5 parts by mass or less, and more preferably 0.1 parts by mass or more and 2 parts by mass or less, based on 100 parts by mass of a content of the semi-aromatic polyamide.
[9] The resin composition according to any one of [1] to [8], wherein a mass ratio of the glass fiber whose cross section is flat to the carbodiimide is 2.5/1 to 2000/1, preferably 5/1 to 1000/1, and more preferably 10/1 to 200/1.
[10] The resin composition according to any one of [1] to [9], wherein an aspect ratio of a cross section perpendicular to a length direction in the glass fiber whose cross section is flat is 1.3/1 or more and 20/1 or less, preferably 2/1 or more and 10/1 or less, more preferably 2.2/1 or more and 8/1 or less, and particularly preferably 2.2/1 or more and 6/1 or less, and the carbodiimide is a water-soluble carbodiimide compound that is soluble in water at 25°C at a concentration of 10% by mass or more, and is a polycarbodiimide having a carbodiimide group (-N=C=N-) and a hydrophilic segment in a molecule, wherein the hydrophilic segment is a structure comprising at least one selected from the group consisting of an oxyalkylene group, an acetal structure, an imino group, a hydroxy group, an amino group, an epoxy group, and a carboxy group, and the polycarbodiimide having a carbodiimide group (-N=C=N-) equivalent of 300 g/mol or more and 600 g/mol or less.
[11] The resin composition according to any one of [1] to [10], wherein a major axis of the cross section perpendicular to the length direction in the glass fiber whose cross section is flat is 16 µm or more and 60 µm or less, and preferably 20 µm or more and 40µm or less.
[12] The resin composition according to any one of [1] to [11], being a resin composition for molding a gear.
[13] A molded body comprising the resin composition according to any one of [1] to [12].
[14] The molded body according to [13], being a gear.

### Effects of Invention

According to the present disclosure, it is possible to provide a resin composition that makes it possible to produce a molded body having enhanced durability and a molded body containing this resin composition.

### Brief Description of Drawings

[Figure 1] Figure 1 is a schematic diagram showing an example of a glass fiber whose cross-sectional shape is flat.
[Figure 2] Figure 2 is a top view obtained by taking a photograph of an example of gears produced in Examples.

### Embodiments for Carrying out Invention

### (Resin composition)

One embodiment of a resin composition contains: a semi-aromatic polyamide having a structural unit represented by formula (1); a glass fiber whose cross-sectional shape is flat; and a carbodiimide.

### <Semi-aromatic polyamide>

The semi-aromatic polyamide in the present embodiment has a structural unit represented by the following formula (1). 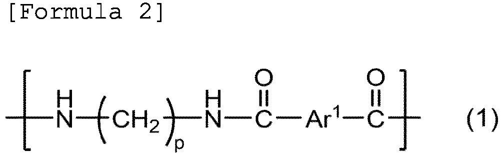 wherein Ar¹ represents a phenylene group or a naphthylene group, and a plurality of Ar¹s of the semi-aromatic polyamide are the same as or different from one another; and p is an integer of 4 to 12.

The semi-aromatic polyamide is a polycondensed product of an aliphatic diamine and an aromatic dicarboxylic acid.

The aliphatic diamine may be an aliphatic diamine having 4 to 12 carbon atoms. Examples of the aliphatic diamine having 4 to 12 carbon atoms include 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, and 1,12-dodecanediamine. The aliphatic diamines may be used singly or in combinations of two or more.

Examples of the aromatic dicarboxylic acid include terephthalic acid, phthalic acid, isophthalic acid, and naphthalene dicarboxylic acid. The aromatic dicarboxylic acids may be used singly or in combinations of two or more.

From the viewpoint that a molded body to be obtained has excellent durability and heat resistance, Ar¹ in the above formula (1) represents a phenylene group or a naphthylene group, and a plurality of Ar¹s of the semi-aromatic polyamide may be the same as or different from one another, and from the viewpoint that a molded body to be obtained has more excellent low water absorbency, p may be 9 or 10.

From the viewpoint that a molded body to be obtained has more excellent durability and heat resistance, Ar¹ in the above formula (1) represents a phenylene group or a naphthylene group, and a plurality of Ar¹s of the semi-aromatic polyamide may be the same as or different from one another, and from the viewpoint that the effect of improving the durability due to the addition of the water-soluble carbodiimide is even more excellent and a molded body to be obtained has even more excellent low water absorbency, p may be 10.

Examples of the phenylene group as Ar¹ include a 1,4-phenylene group and a 1,3-phenylene group. Examples of the naphthylene group as Ar¹ include a 2,6-naphthylene group and a 2,7-naphthylene group.

Preferably, in the above formula (1), Ar¹ represents a 1,4-phenylene group, and p may be an integer of 4 to 12. More preferably, in the above formula (1), Ar¹ represents a 1,4-phenylene group, and p may be 9 or 10. Particularly preferably, in the above formula (1), Ar¹ represents a 1,4-phenylene group, and p may be 10.

In the semi-aromatic polyamide, the content of the structural unit represented by the above formula (1) is preferably 40% or more, more preferably 80% or more, and even more preferably 90% or more, based on the total number of units (100%) of all the structural units in the semi-aromatic polyamide.

In the semi-aromatic polyamide, the content of the structural unit represented by the above formula (1) wherein Ar¹ represents a phenylene group or a naphthylene group, a plurality of Ar¹ of the semi-aromatic polyamide may be the same as or different from one another, and p is 9 or 10 is preferably 40% or more, more preferably 80% or more, and even more preferably 90% or more, based on the total number of units (100%) of all the structural units in the semi-aromatic polyamide.

In the semi-aromatic polyamide, the content of the structural unit represented by the above formula (1) wherein Ar¹ represents a 1,4-phenylene group, and p is 9 or 10 is preferably 40% or more, more preferably 80% or more, and even more preferably 90% or more, based on the total number of units (100%) of all the structural units in the semi-aromatic polyamide.

In the semi-aromatic polyamide, the content of the structural unit represented by the above formula (1) wherein Ar¹ represents a 1,4-phenylene group, and p is 10 is preferably 40% or more, more preferably 80% or more, and even more preferably 90% or more, based on the total number of units (100%) of all the structural units in the semi-aromatic polyamide.

The melt mass flow rate (MFR) of the semi-aromatic polyamide, as measured in accordance with JIS K 7210 at a test temperature of 330°C with a load of 2160 g, is preferably 150 g/10 min or less, more preferably 125 g/10 min or less, and even more preferably 100 g/10 min or less.

As another aspect, the MFR of the semi-aromatic polyamide, as measured in accordance with JIS K 7210 at a test temperature of 330°C with a load of 2160 g, is preferably 80 g/10 min or less, more preferably 50 g/10 min or less, and even more preferably 30 g/10 min or less.

The resin composition containing a semi-aromatic polyamide having an MFR of equal to or less than the above upper limit value makes it possible to produce a molded body having even more excellent durability.

The MFR of the semi-aromatic polyamide, as measured in accordance with JIS K 7210 at a test temperature of 330°C with a load of 2160 g, may be 5 g/10 min or more, may be 10 g/10 min or more, or may be 15 g/10 min or more.

The above-exemplified upper limit values and lower limit values of the MFR of the semi-aromatic polyamide can be freely combined.

The MFR of the semi-aromatic polyamide, as measured in accordance with JIS K 7210 at a test temperature of 330°C with a load of 2160 g, may be 5 g/10 min or more and 150 g/10 min or less, may be 10 g/10 min or more and 125 g/10 min or less, or may be 15 g/10 min or more and 100 g/10 min or less, as an example.

As another aspect, the MFR of the semi-aromatic polyamide, as measured in accordance with JIS K 7210 at a test temperature of 330°C with a load of 2160 g, may be 5 g/10 min or more and 80 g/10 min or less, may be 10 g/10 min or more and 50 g/10 min or less, or may be 15 g/10 min or more and 30 g/10 min or less, as an example.

The MFR of the semi-aromatic polyamide can be controlled, for example, by appropriately adjusting the conditions relating to the reaction efficiency of the polycondensation reaction, such as raw material monomers, a catalyst, and reaction time for example.

The resin composition of the present embodiment may contain one of the semi-aromatic polyamides or may contain two or more of the semi-aromatic polyamides.

In the resin composition of the present embodiment, the content of the semi-aromatic polyamide is, for example, 40% by mass or more, and may be 40% by mass or more and 95% by mass or less, may be 50% by mass or more and 90% by mass or less, or may be 60% by mass or more and 85% by mass or less, based on the total mass of the resin composition.

### <Glass fiber whose cross-sectional shape is flat>

A glass fiber whose cross-sectional shape is flat (hereinafter, sometimes abbreviated to flat glass fiber) in the present embodiment refers to a glass fiber whose cross section perpendicular to the length direction has a noncircular shape such as an ellipse shape or an oval shape.

As the flat glass fiber, E-glass, A-glass, C-glass, D-glass, AR-glass, R-glass, S-glass, or a mixture thereof can be used.

The glass fiber may be treated with a coupling agent such as a silane-based coupling agent or a titanium-based coupling agent as necessary.

In addition, the flat glass fiber may be covered with a thermoplastic resin such as a polyamide resin, a urethane resin, an acrylic resin, or an ethylene/vinyl acetate copolymer, or a thermosetting resin such as an epoxy resin. The glass fiber may be treated with a sizing agent.

The aspect ratio (major axis/minor axis) of the cross section perpendicular to the length direction in the flat glass fiber is preferably within a range of 1.3/1 or more and 20/1 or less, more preferably 2/1 or more and 10/1 or less, even more preferably 2.2/1 or more and 8/1 or less, and particularly preferably 2.2/1 or more and 6/1 or less.

Here, the major axis refers to the longest axis of the cross section, and the minor axis refers to the shortest axis of the cross section.

When the aspect ratio of the cross section is equal to or more than the lower limit value of the above preferred range, the semi-aromatic polyamide is efficiently reinforced by the flat glass fiber. Therefore, excellent mechanical strength can be imparted to a molded body obtained by molding the resin composition. On the other hand, when the aspect ratio of the cross section is equal to or less than the above upper limit value of the preferred range, the flat glass fiber is easily dispersed in the semi-aromatic polyamide. In addition, the flat glass fiber is easy to handle during production of the resin composition.

As the major axis and minor axis of the cross section, the number average values of the values obtained by observing the flat glass fiber with a scanning electron microscope (1000 magnifications) and measuring the major axes and minor axes of 50 flat glass fibers are respectively employed.

The major axis of the cross section is preferably 16 µm or more and 60 µm or less, and more preferably 20 µm or more and 40 µm or less. The minor axis of the cross section is preferably 4 µm or more and 20 µm or less, and more preferably 5 µm or more and 15 µm or less.

Note that the major axis and minor axis of the cross section of the flat glass fiber in the resin composition or the molded body hardly change due to melt kneading and are usually the same as the major axis and minor axis of the cross section of the flat glass fiber before the melt kneading.

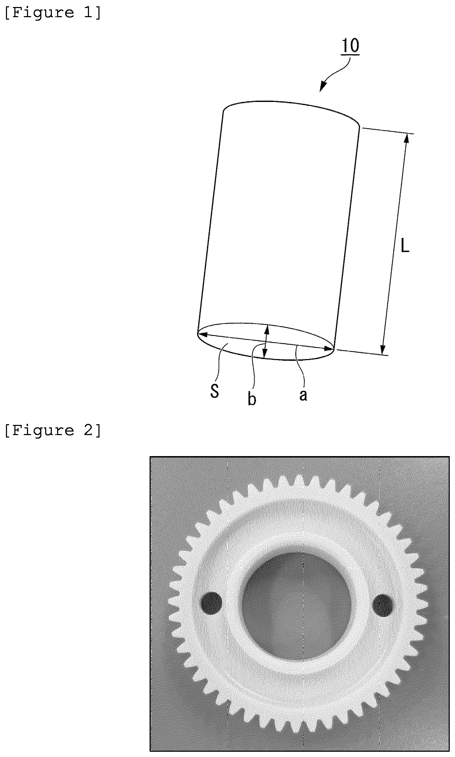

Figure 1 is a schematic diagram showing an example of the flat glass fiber.

Figure 1 defines length L of the fiber, cross section S perpendicular to the length direction, major axis a and minor axis b in cross section S for a flat glass fiber 10. The shape of cross section S is ellipse.

The weight average fiber length of the flat glass fiber in the resin composition may be 300 µm or more and 700 µm or less, or may be 400 µm or more and 600 µm or less.

When the weight average fiber length of the flat glass fiber is equal to or more than the above lower limit value, the durability of the molded body obtained by molding the resin composition is more likely to be enhanced. On the other hand, when the weight average fiber length of the flat glass fiber is equal to or less than the above upper limit value, the semi-aromatic polyamide is efficiently reinforced by the flat glass fiber.

### [Method for measuring weight average fiber length of glass fiber in resin composition]

The resin composition is heated in an air atmosphere to remove the resin component and obtain an ashed residue containing the glass fiber. A sample solution is obtained by mixing the ashed residue with ethylene glycol. Next, the glass fiber in a solution obtained by diluting the sample solution five-fold with ethylene glycol is imaged one by one using a particle shape image analyzer. The imaged glass fiber is observed to read the length in the longitudinal direction as the fiber length. The fiber lengths of 10,000 glass fibers are measured to determine the arithmetic mean value of the obtained fiber lengths of the glass fibers, and the value is defined as the weight average fiber length of the glass fiber.

The resin composition of the present embodiment may contain one type of the flat glass fiber or may contain two or more types of the flat glass fiber.

The content of the flat glass fiber in the resin composition of the present embodiment is, for example, 5% by mass or more, and may be 5% by mass or more and 60% by mass or less, may be 10% by mass or more and 50% by mass or less, or may be 15% by mass or more and 40% by mass or less, based on the total mass of the resin composition.

### <Carbodiimide>

The carbodiimide in the present embodiment is any one as long as it is one having a carbodiimide group **(-**N=C=N-) in the molecule, may be a monocarbodiimide having one carbodiimide group in the molecule, or may be a polycarbodiimide having two or more carbodiimide groups in the molecule.

The carbodiimide may be an aromatic carbodiimide or may be an aliphatic carbodiimide. In addition, the carbodiimide may be an aromatic monocarbodiimide, may be an aliphatic monocarbodiimide, may be an aromatic polycarbodiimide, or may be an aliphatic polycarbodiimide.

Examples of the above aromatic polycarbodiimide include a polymer containing, in the main chain, a repeating structure formed by a carbodiimide group and an aromatic hydrocarbon. Examples of the above aliphatic polycarbodiimide include a polymer containing, in the main chain, a repeating structure formed by a carbodiimide group and a non-aromatic hydrocarbon.

The repeating structure formed by a carbodiimide group and an aromatic hydrocarbon can contain a divalent aromatic hydrocarbon group. Examples of the divalent aromatic hydrocarbon group include divalent aryl groups such as a phenylene group, a naphthylene group, and a biphenylene group, and a divalent aromatic hydrocarbon group having 6 to 14 carbon atoms is preferred. One or more hydrogen atoms of the aromatic hydrocarbon group may be each independently substituted with a halogen atom, an alkyl group having 1 to 12 carbon atoms, or an alkoxy group having 1 to 12 carbon atoms.

The repeating structure formed by a carbodiimide group and a non-aromatic hydrocarbon can contain a divalent aliphatic hydrocarbon group. The divalent aliphatic hydrocarbon may have a structure of any of linear, branched, and cyclic structures. Examples of the divalent aliphatic hydrocarbon group include a divalent saturated aliphatic hydrocarbon group such as an alkylene group and a divalent alicyclic hydrocarbon group such as a cycloalkylene group, and a plurality of these structures may be contained. The divalent saturated aliphatic hydrocarbon group is preferably a divalent saturated aliphatic hydrocarbon group having 1 to 20 carbon atoms. The divalent alicyclic hydrocarbon group is preferably a divalent alicyclic hydrocarbon group having 3 to 20 carbon atoms.

Examples of the alkylene group include a methylene group, an ethylene group, a propylene group, a butylene group, a pentylene group, and a hexylene group. Examples of the cycloalkylene group include a cyclopropylene group, a cyclobutylene group, a cyclopentylene group, and a cyclohexylene group.

From the viewpoint that the effect of improving the durability due to the addition of the carbodiimide is more excellent, the aliphatic polycarbodiimide is preferably linear or branched.

The carbodiimide group (-N=C=N-) equivalent of the carbodiimide in the present embodiment may be 100 g/mol or more and 1000 g/mol or less.

In addition, the carbodiimide may be a water-soluble carbodiimide that is soluble in water.

### <<Water-soluble carbodiimide>>

The water-soluble carbodiimide is a carbodiimide compound that has a carbodiimide group (-N=C=N-) and a hydrophilic segment in the molecule and that is soluble in water.

The "compound that is soluble in water" as referred to here refers to a compound that is soluble in water at 25°C at a concentration of 10% by mass or more. As the water-soluble carbodiimide, a carbodiimide compound that is soluble in water at 25°C at a concentration of preferably 20% by mass or more, more preferably at a concentration of 35% by mass or more, is used.

Examples of the hydrophilic segment include structures containing at least one selected from the group consisting of an oxyalkylene group, an acetal structure, an imino group, a hydroxy group, an amino group, an epoxy group, and a carboxy group.

The water-soluble carbodiimide may be a monocarbodiimide or may be a polycarbodiimide; however, from the viewpoint of having high reactivity with the semi-aromatic polyamide, the water-soluble carbodiimide is preferably a polycarbodiimide.

The carbodiimide group (-N=C=N-) equivalent in the water-soluble carbodiimide is preferably 300 g/mol or more, and may be 300 g/mol or more and 600 g/mol or less, or may be 350 g/mol or more and 500 g/mol or less.

As the carbodiimide in the present embodiment, a known carbodiimide can be used, or a commercially available carbodiimide can be used. Examples of the commercially available product include CARBODILITE (R) V-02, V-02-L2, SV-02, V-04, and V-10 (all manufactured by Nisshinbo Chemical Inc.), which are water-soluble types of CARBODILITE (R) series.

The resin composition of the present embodiment may contain one carbodiimide or may contain two or more carbodiimides.

As the carbodiimide, a water-soluble carbodiimide is preferably used among those described above because the water-soluble carbodiimide has high reactivity with the semi-aromatic polyamide and water can be utilized as a medium.

The content of the carbodiimide in the resin composition of the present embodiment is, for example, 0.03% by mass or more, and may be 0.03% by mass or more and 2% by mass or less, may be 0.05% by mass or more and 1.8% by mass or less, or may be 0.05% by mass or more and 1% by mass or less, based on the total mass of the resin composition.

### <Other components>

The resin composition of the present embodiment may contain other components that do not correspond to any of the above-described semi-aromatic polyamide, flat glass fiber, and carbodiimide in a range where the effects of the present disclosure are not impaired.

Examples of the other components include a filler other than the glass fiber, an additive, and, in addition, a resin that does not correspond to the semi-aromatic polyamide (hereinafter, sometimes referred to as "additional resin").

The other components may be used singly or in combinations of two or more.

The filler other than the glass fiber may be a fibrous filler or a granular filler. In addition, the filler other than the glass fiber may be an inorganic filler or may be an organic filler.

Examples of the additive include a stabilizer, a release agent, an antioxidant, a heat stabilizer, an ultraviolet absorber, an antistatic agent, a surfactant, a flame retardant, and a colorant.

Examples of the additional resin include: thermoplastic resins such as polyester, polyphenylene sulfide, polyether ketone, polycarbonate, polyphenylene ether, polyetherimide, and a fluororesin; and thermosetting resins such as a phenol resin, an epoxy resin, a polyimide resin, and a cyanate resin.

In the resin composition of the present embodiment, the semi-aromatic polyamide having a structural unit represented by the above formula (1), the flat glass fiber, the carbodiimide, and other components are contained in such a way that the total of contents (% by mass) of these is 100% by mass.

As described above, in the resin composition of the present embodiment, the flat glass fiber and the carbodiimide are used in combination together with the semi-aromatic polyamide having a structural unit represented by the above formula (1). The carbodiimide has a functional group that can react with the semi-aromatic polyamide. When this carbodiimide coexists, thereby the adhesion between the flat glass fiber and the semi-aromatic polyamide at the interface of the two is strengthened. In addition, by employing the flat glass fiber, the cross-sectional area is made large as compared with the case where the cross-sectional shape of the glass fiber is circular, and breakage of the glass fiber is unlikely to occur when a load is applied to the molded body. Furthermore, by employing the flat glass fiber, the glass fiber is unlikely to be pulled out from the molded body when a load is applied to the molded body, because the fiber length of the glass fiber is long in the longitudinal direction. Therefore, it is considered that according to the resin composition of the present embodiment, the durability when a molded body is made is enhanced.

The resin composition of the present embodiment can enhance the durability of the molded body and therefore is suitable as a molding material for a mechanical component such as a gear and is particularly suitable as a resin composition for molding a gear.

The durability of the molded body can be evaluated using, as an example, the total number of revolutions until the gear is destructed in the [Durability test] described below as an index.

### [Durability test]

In a power-absorbing gear running tester shown in JIS B 1759, a metal master gear as a drive gear and a gear to be tested are engaged and installed.

The tester is operated under the conditions of a load torque to the gear of 8 N·m, a revolution speed of 1000 rpm, a non-lubricating condition, a temperature of 23°C, and a relative humidity of 50%RH to measure the total number of revolutions until the gear is destructed.

Note that the "destruction" of the gear in the durability test as referred to here is defined as a state in which the power cannot be transferred from the metal master gear to the gear due to breakage of the teeth of the gear or other reasons.

### [Method for producing resin composition]

The resin composition of the embodiment described above can be produced by mixing the semi-aromatic polyamide having a structural unit represented by the above formula (1), the flat glass fiber, the carbodiimide, and, if necessary, other components. In that case, the semi-aromatic polyamide, the flat glass fiber, and the carbodiimide, and, if necessary, other components are blended in such a way that the total of contents (% by mass) of those in the intended resin composition is 100% by mass.

One embodiment of such a method for producing the resin composition is a production method including a step (S) of mixing the semi-aromatic polyamide having a structural unit represented by the above formula (1), the flat glass fiber, and the water-soluble carbodiimide.

As the method for producing the resin composition of such an embodiment, a production method including: a step (S1) of selecting the water-soluble carbodiimide as the carbodiimide, mixing the flat glass fiber and the water-soluble carbodiimide in advance to prepare a mixture (M) of the flat glass fiber and the water-soluble carbodiimide; and a step (S2) of mixing the semi-aromatic polyamide having a structural unit represented by the above formula (1) and the mixture (M) is suitable.

One embodiment of the step (S1) mixes: an aqueous solution of the water-soluble carbodiimide; and the flat glass fiber, and then heats the resulting mixture to remove water and prepare the mixture (M) of the flat glass fiber and the water-soluble carbodiimide. The water-soluble carbodiimide concentration in the aqueous solution of the water-soluble carbodiimide is, for example, 30 to 50% by mass. The mixture (M) is solid such as in the form of a powder.

One embodiment of the step (S2) carries out melt kneading by charging the semi-aromatic polyamide and the mixture (M) prepared in the step (S1) into a twin-screw extruder, to thereby prepare the resin composition having a desired shape such as a pellet.

According to the production method including the step (S1) and step (S2) described above, the resin composition that makes it possible to produce a molded body having more enhanced durability can be easily produced. This is considered as follows: When the aqueous solution of the water-soluble carbodiimide and the flat glass fiber are mixed in advance in the step (S1), thereby the carbodiimide can be fixed strongly to the glass fiber surface. Thereby, the adhesion at the interface between the glass fiber with the carbodiimide strongly fixed thereto and the semi-aromatic polyamide is further strengthened, and therefore the durability when a molded body is made is enhanced more.

As another aspect, the present disclosure further includes the following modes.

[15] A resin composition comprising: a semi-aromatic polyamide having a structural unit represented by the following formula (1); a glass fiber whose cross-sectional shape is flat; and a carbodiimide,
wherein a content of the semi-aromatic polyamide is 40% by mass or more and 95% by mass or less, preferably 50% by mass or more and 90% by mass or less, and more preferably 60% by mass or more and 85% by mass or less,
a content of the glass fiber whose cross section is flat is 5% by mass or more and 60% by mass or less, preferably 10% by mass or more and 50% by mass or less, and more preferably 15% by mass or more and 40% by mass or less,
a content of the carbodiimide is 0.03% by mass or more and 2% by mass or less, preferably 0.05% by mass or more and 1.8% by mass or less, and more preferably 0.05% by mass or more and 1% by mass or less,
based on a total mass of the resin composition. 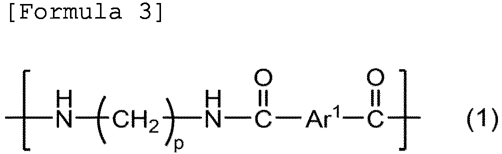
wherein Ar¹ represents a phenylene group or a naphthylene group, and a plurality of Ar¹s of the semi-aromatic polyamide are the same as or different from one another; and p is an integer of 4 to 12.

[16] A resin composition comprising: a semi-aromatic polyamide having a structural unit represented by the following formula (1); a glass fiber whose cross-sectional shape is flat; and a carbodiimide,
wherein a content of the glass fiber whose cross section is flat is 5 parts by mass or more and 160 parts by mass or less, preferably 25 parts by mass or more and 75 parts by mass or less, and more preferably 35 parts by mass or more and 50 parts by mass or less; and
a content of the carbodiimide is 0.03 parts by mass or more and 5 parts by mass or less, preferably 0.05 parts by mass or more and 3.5 parts by mass or less, and more preferably 0.1 parts by mass or more and 2 parts by mass or less,
based on 100 parts by mass of a content of the semi-aromatic polyamide. 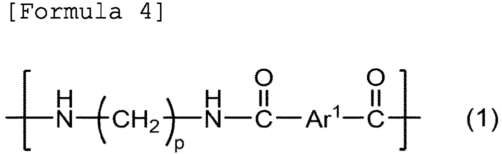
wherein Ar¹ represents a phenylene group or a naphthylene group, and a plurality of Ar¹s of the semi-aromatic polyamide are the same as or different from one another; and p is an integer of 4 to 12.

[17] The resin composition according to [15] or [16], wherein a mass ratio of the glass fiber whose cross section is flat to the carbodiimide is 2.5/1 to 2000/1, preferably 5/1 to 1000/1, and more preferably 10/1 to 200/1.

[18] The resin composition according to any one of [15] to [17],
wherein the semi-aromatic polyamide is a semi-aromatic polyamide having a structural unit represented by formula (1) wherein Ar¹ represents a 1,4-phenylene group and p is 9 or 10,
an aspect ratio of a cross section perpendicular to a length direction in the glass fiber whose cross section is flat is 1.3/1 or more and 20/1 or less, preferably 2/1 or more and 10/1 or less, more preferably 2.2/1 or more and 8/1 or less, and particularly preferably 2.2/1 or more and 6/1 or less, and
the carbodiimide is
a water-soluble carbodiimide compound that is soluble in water at 25°C at a concentration of 10% by mass or more, and
is a polycarbodiimide having a carbodiimide group (-N=C=N-) and a hydrophilic segment in a molecule,
wherein the hydrophilic segment is a structure comprising at least one selected from the group consisting of an oxyalkylene group, an acetal structure, an imino group, a hydroxy group, an amino group, an epoxy group, and a carboxy group,
the polycarbodiimide having a carbodiimide group (-N=C=N-) equivalent of 300 g/mol or more and 600 g/mol or less.

[19] The resin composition according to [18], wherein a major axis of the cross section perpendicular to the length direction in the glass fiber whose cross section is flat is 16 µm or more and 60 µm or less, and preferably 20 µm or more and 40µm or less.
[20] The resin composition according to any one of [15] to [19], wherein the weight average fiber length of the flat glass fiber in the resin composition is 300 µm or more and 700 µm or less.

### (Molded body)

One embodiment of the molded body contains the resin composition of the embodiment described above.

As the molded body of the present embodiment, a molded body containing the resin composition of the embodiment described above can be given as an example.

The molding method from the resin composition to the molded body is not particularly limited, but melt molding is preferred, and examples thereof include extrusion molding, T-die molding, blow molding, and injection molding, and a molding method according to the shape and the like of the molded body can be selected.

The molded body of the present embodiment can be applied to all uses to which a resin composition can be generally applied. Examples of the molded body of the present embodiment include electrical and electronic components such as connectors, sockets, relay components, coil bobbins, optical pickups, oscillators, printed wiring boards, circuit boards, semiconductor packages, and computer-related components; semiconductor production process-related components such as IC trays and wafer carriers; home electric appliance components such as VTRs, televisions, irons, air conditioners, stereos, vacuum cleaners, refrigerators, rice cookers, and lighting apparatus; lighting apparatus components such as lamp reflectors and lamp holders; audio product components such as compact discs, laser discs (R), and speakers; communication device components such as ferrules for optical cables, telephone components, facsimile components, and modems; copier and printerrelated components such as separation claws and heater holders; machine components such as impellers, fan gears, gears, bearings, and motor components and cases; automobile components such as automobile mechanism components, engine components, components in an engine room, electrical components, and interior components; cooking utensils such as microwave cooking pots and heatresistant tableware; heat insulating and soundproofing materials such as floor materials and wall materials, support materials such as beams and columns, building materials such as roof materials, and materials for civil engineering and construction; components for aircraft, spacecraft, and space devices; radiation facility members such as nuclear reactors, marine facility members, cleaning jigs, optical device components, valves, pipes, nozzles, filters, membranes, medical device components and medical materials, components for sensors, sanitary fixtures, sporting goods, leisure equipment, and binding bands.

The molded body of the present embodiment contains the resin composition of the embodiment described above, and therefore the durability is improved. Therefore, the molded body of the present embodiment is suitable for sliding uses among others and is suitable as a mechanical component such as a gear among the sliding uses, and can be utilized suitably as a gear in particular.

Examples of the type of the gear include a spur gear, a helical gear, a rack, an internal gear, a worm gear, a worm wheel gear, a bevel gear, and a hypoid gear.

### Examples

Hereinafter, the present disclosure will be described more specifically with reference to Examples, but the present disclosure is not limited by the following Examples.

### <Production of resin composition>

As the semi-aromatic polyamide, the glass fiber, and the carbodiimide, the following ones were respectively used.

### • Semi-aromatic polyamide

Semi-aromatic polyamide (P1): Semi-aromatic polyamide having structural unit represented by formula (1) wherein Ar¹ is 1,4-phenylene group and p is 10. Melt mass flow rate (MFR) 24 g/10 min.
Semi-aromatic polyamide (P2): Semi-aromatic polyamide having a structural unit represented by formula (1) wherein Ar¹ is 1,4-phenylene group and p is 9. MFR 20 g/10 min.
The MFRs of the semi-aromatic polyamides were measured in accordance with JIS K 7210 at a test temperature of 330°C with a load of 2160 g.

### • Glass fiber

Glass fiber whose cross-sectional shape is flat (flat glass fiber): "CSG 3PA-820S," manufactured by NITTO BOSEKI CO., LTD., major axis 28 µm, minor axis 7 µm, aspect ratio (major axis/minor axis) 4/1, average fiber length 3 mm, silane-based surface treatment
Glass fiber whose cross-sectional shape is circular (circular glass fiber): "T-275H," manufactured by Nippon Electric Glass Co., Ltd., fiber diameter 10 µm, average fiber length 3 mm

### • Carbodiimide

Carbodiimide (1): Aqueous solution of water-soluble carbodiimide, "CARBODILITE SV-02," manufactured by Nisshinbo Chemical Inc., nonvolatile content 40% by mass, carbodiimide group equivalent 430 g/mol

### [Method for measuring weight average fiber length of glass fiber in pellet-shaped resin composition]

A pellet in an amount of 5 g was heated at 600°C for 6 hours in an air atmosphere with a muffle furnace (FP410 manufactured by Yamato Scientific Co., Ltd.) to remove the resin and obtain an ashed residue containing the glass fiber. A sample solution was obtained by mixing 0.3 g of the ashed residue with 50 mL of ethylene glycol and irradiating the resulting mixture with ultrasonic waves for 5 minutes using an ultrasonic cleaner (model number: VS-25, manufactured by VELVO-CLEAR). The glass fiber in a solution obtained by diluting 5 mL of the sample solution five-fold with ethylene glycol was imaged one by one using a particle shape image analyzer ("Rapid VUE," manufactured by BECKMAN COULTER, Inc.). The imaged glass fiber was observed to read the length in the longitudinal direction as the fiber length. The fiber lengths of 10,000 glass fibers were measured to determine the arithmetic mean value of the fiber lengths, and the value was defined as the weight average fiber length of the glass fiber.

### (Example 1)

Mixed were 1.25 parts by mass of carbodiimide (1) and 30 parts by mass of the flat glass fiber, and the resulting mixture was then heated to 120°C to remove water and obtain 30.5 parts by mass of mixture (Ma) of the flat glass fiber and the water-soluble carbodiimide.

In a twin-screw extruder (manufactured by Ikegai Corp., PCM-30), 30.5 parts by mass of mixture (Ma) obtained and 69.5 parts by mass of semi-aromatic polyamide (P1) were charged to perform melt kneading under conditions of a barrel temperature of 320 to 350°C, a number of screw revolutions of 150 rpm, and a discharge amount of 5 kg/minute under deaeration to discharge the resulting mixture in a strand shape through a circular nozzle (discharge port) and pelletize the discharged mixture with a strand cutter through a belt conveyor with a water-cooling system, and thus a pellet-shaped resin composition was obtained. The weight average fiber length of the glass fiber in the obtained pellet was 448 µm.

### (Comparative Example 1)

A pellet-shaped resin composition was obtained in the same manner as in Example 1 except that only 30 parts by mass of the flat glass fiber was used instead of 30.5 parts by mass of the above mixture (Ma) and the amount of semi-aromatic polyamide (P1) blended was changed to 70 parts by mass. The weight average fiber length of the glass fiber in the obtained pellet was 444 µm.

### (Comparative Example 2)

A pellet-shaped resin composition was obtained in the same manner as in Example 1 except that 30 parts by mass of the flat glass fiber was changed to 30 parts by mass of the circular glass fiber. The weight average fiber length of the glass fiber in the obtained pellet was 408 µm.

### (Example 2)

A pellet-shaped resin composition was obtained in the same manner as in Example 1 except that 69.5 parts by mass of semi-aromatic polyamide (P1) was changed to 69.5 parts by mass of semi-aromatic polyamide (P2). The weight average fiber length of the glass fiber in the obtained pellet was 448 µm.

### (Comparative Example 3)

A pellet-shaped resin composition was obtained in the same manner as in Example 2 except that only 30 parts by mass of the flat glass fiber was used instead of 30.5 parts by mass of the above mixture (Ma) and the amount of semi-aromatic polyamide (P2) blended was changed to 70 parts by mass. The weight average fiber length of the glass fiber in the obtained pellet was 444 µm.

### <Examples of gear production>

The pellet-shaped resin composition was put into an injection molding machine to perform injection molding under injection conditions of a barrel temperature of 320 to 340°C, a metal mold temperature of 120°C, a back pressure of 6 Mpa, a number of screw revolutions of 100 rpm, an injection pressure of 100 Mpa, an injection speed of 30 mm/second, an injection time of 6 seconds, a dwelling pressure of 90 Mpa, and a cooling time of 25 seconds, and thus a gear was produced.

The gear was produced as a gear having a shape of a spur gear, a module of 1, a number of teeth of 48, a pressure angle of 20°, a reference diameter of 48 mm, a tip diameter of 50 mm, a root diameter of 45.5 mm, a face width of 8 mm, a profile shift coefficient of 0, and a span measurement of 16.909 (a number of teeth in the span of 6). An example of produced gears is shown in Figure 2.

### <Evaluation>

The produced gears were subjected to the following durability test.

### [Durability test]

In a power-absorbing gear running tester shown in JIS B 1759, a metal master gear [material: SCM420 carburized, quenched, and tempered (surface-cured) product, quenched and cured layer depth 0.8 to 1.2, hardness HRC 55 to 60, gear shape: spur gear, module 1, number of teeth 67, pressure angle 20°, reference diameter 67 mm, tip diameter 69 mm, root diameter 64.5 mm, face width 15 mm, profile shift coefficient 0, and span measurement 23.079 (number of teeth in span 8)] as a drive gear and the produced gear were engaged and installed.

The tester was operated under the conditions of a load torque to the produced gear of 8 N·m, a revolution speed of 1000 rpm, a non-lubricating condition, a temperature of 23°C, a relative humidity of 50%RH, and a back lash of 0.1 mm in the normal line direction to measure the total number of revolutions until the gear was destructed. The results are shown in Table 1.

Note that the "destruction" of the gear was defined as a state in which the power was not able to be transferred from the metal master gear to the gear due to breakage of the teeth of the gear or other reasons.

**[Table 1]**

| Resin composition | | Example 1 | Comparative Example 1 | Comparative Example 2 | Example 2 | Comparative Example 3 |
|---|---|---|---|---|---|---|
| Composition /% by mass | Semi-aromatic polyamide (P1) | 69.5 | 70 | 69.5 | | |
| | Semi-aromatic polyamide (P2) | | | | 69.5 | 70 |
| | Flat carbon fiber | 30 | 30 | | 30 | 30 |
| | Circular glass fiber | | | 30 | | |
| | Carbodiimide (1) | 0.5 | | 0.5 | 0.5 | |
| Evaluation | Gear durability test Total number of revolutions until gear is destructed | 5.5 × 10⁵ | 2.5 × 10⁵ | 3.1 × 10⁴ | 2.6 × 10⁵ | 1.8 × 10⁵ |

According to the results of the durability test, the durability of the gear was improved in Example 1 containing the flat glass fiber as compared with Comparative Example 2 containing the circular glass fiber.

The durability test was conducted under a high load condition of a load torque of 8 N·m, and therefore it was shown that the pellet-shaped resin compositions of Examples 1 to 2 are useful molding materials that make it possible to produce a gear having excellent durability under a high load condition.

Each configuration in each embodiment, a combination thereof, and the like are examples, and addition, omission, substitution of a configuration, and other modifications of a configuration are possible unless they depart from the scope of the present disclosure. In addition, the present disclosure is not limited by each embodiment but is limited only by the claims.

### Reference Sign List

- 10: glass fiber

## Claims

1. A resin composition comprising:
a semi-aromatic polyamide having a structural unit represented by the following formula (1);
a glass fiber whose cross-sectional shape is flat; and
a carbodiimide: 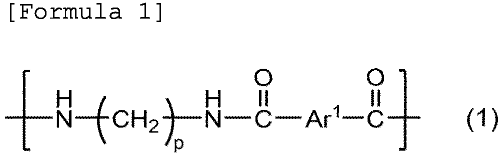
wherein Ar¹ represents a phenylene group or a naphthylene group, and a plurality of Ar¹s of the semi-aromatic polyamide are the same as or different from one another; and p is an integer of 4 to 12.

2. The resin composition according to claim 1, wherein an aspect ratio of a cross section perpendicular to a length direction in the flat glass fiber is 1.3/1 or more and 20/1 or less.

3. The resin composition according to claim 1 or 2, wherein the carbodiimide is a water-soluble carbodiimide.

4. The resin composition according to any one of claims 1 to 3, wherein the semi-aromatic polyamide is a semi-aromatic polyamide having a structural unit wherein Ar¹ represents a 1,4-phenylene group and p is 9 or 10 in formula (1).

5. The resin composition according to any one of claims 1 to 4, wherein a content of the carbodiimide is 0.03% by mass or more and 20% by mass or less, 0.03% by mass or more and 2% by mass or less, preferably 0.05% by mass or more and 1.8% by mass or less, and more preferably 0.05% by mass or more and 1% by mass or less, based on a total mass of the resin composition.

6. The resin composition according to any one of claims 1 to 5, wherein a content of the glass fiber whose cross-sectional shape is flat is 5% by mass or more and 60% by mass or less, preferably 10% by mass or more and 50% by mass or less, and more preferably 15% by mass or more and 40% by mass or less, based on a total mass of the resin composition.

7. The resin composition according to any one of claims 1 to 6, wherein a content of the semi-aromatic polyamide is 40% by mass or more and 95% by mass or less, preferably 50% by mass or more and 90% by mass or less, and more preferably 60% by mass or more and 85% by mass or less, based on a total mass of the resin composition.

8. The resin composition according to any one of claims 1 to 7, wherein a content of the glass fiber whose cross section is flat is 5 parts by mass or more and 160 parts by mass or less, preferably 25 parts by mass or more and 75 parts by mass or less, and more preferably 35 parts by mass or more and 50 parts by mass or less; and
a content of the carbodiimide is 0.03 parts by mass or more and 5 parts by mass or less, preferably 0.05 parts by mass or more and 3.5 parts by mass or less, and more preferably 0.1 parts by mass or more and 2 parts by mass or less,
based on 100 parts by mass of a content of the semi-aromatic polyamide.

9. The resin composition according to any one of claims 1 to 8, wherein a mass ratio of the glass fiber whose cross section is flat to the carbodiimide is 2.5/1 to 2000/1, preferably 5/1 to 1000/1, and more preferably 10/1 to 200/1.

10. The resin composition according to any one of claims 1 to 9, wherein an aspect ratio of a cross section perpendicular to a length direction in the glass fiber whose cross section is flat is 1.3/1 or more and 20/1 or less, preferably 2/1 or more and 10/1 or less, more preferably 2.2/1 or more and 8/1 or less, and particularly preferably 2.2/1 or more and 6/1 or less, and
the carbodiimide is a water-soluble carbodiimide compound that is soluble in water at 25°C at a concentration of 10% by mass or more, and is a polycarbodiimide having a carbodiimide group (-N=C=N-) and a hydrophilic segment in a molecule,
wherein the hydrophilic segment is a structure comprising at least one selected from the group consisting of an oxyalkylene group, an acetal structure, an imino group, a hydroxy group, an amino group, an epoxy group, and a carboxy group, and the polycarbodiimide having a carbodiimide group (-N=C=N-) equivalent of 300 g/mol or more and 600 g/mol or less.

11. The resin composition according to any one of claims 1 to 10, wherein a major axis of the cross section perpendicular to the length direction in the glass fiber whose cross section is flat is 16 µm or more and 60 µm or less, and preferably 20 µm or more and 40µm or less.

12. The resin composition according to claim 1, being a resin composition for molding a gear.

13. A molded body comprising the resin composition according to any one of claims 1 to 7.

14. The molded body according to claim 8, being a gear.
